# FASCICULE DE BREVET EUROPEEN

(11) **EP 1 139 832 B1**
(45) Date de publication et mention de la délivrance du brevet: **21.08.2002**
(21) Numéro de dépôt: 98963629.5
(22) Date de dépôt: 24.12.1998
(51) Int. Cl.: A47J 31/40

(54) **CHAMBRE D'EXTRACTION POUR MACHINE AUTOMATIQUE POUR LA PREPARATION DE BOISSONS CHAUDES**
BRÜHKAMMER FÜR EINEN AUTOMAT ZUM ZUBEREITEN VON HEISSEN GETRÄNKEN
EXTRACTION CHAMBER FOR AN AUTOMATIC MACHINE PREPARING HOT DRINKS

(43) Date de publication de la demande: 10.10.2001
(73) Titulaire: Compagnie Méditerraneenne des Cafes, 06510 Carros (FR)
(72) Inventeur: Blanc, Jean,Pierre, Office Mediterraneen de B.I.M., 06000 Nice (FR)
(74) Mandataire: Hautier, Jean-Louis
(86) Numéro de dépôt international: FR9802871
(87) Numéro de publication internationale: WO00038558

(56) Documents cités:
- EP-A- 0 002 987
- EP-A- 0 867 142
- WO-A-95/17121
- WO-A-98/47418
- FR-A- 2 770 987

## Description

L'invention a pour objet une chambre d'extraction pour machine automatique pour la préparation de boissons chaudes.

Les machines automatiques utilisant des pastilles ou dosettes pré-dosées avec une introduction verticale doivent recevoir ou éjecter des pastilles suffisamment rigides pour que celles-ci ne collent pas et tombent par gravité de la chambre d'extraction et ce, sans utiliser d'extracteur mécanique compliqué. Toutes ces pastilles ou dosettes sont, soit rigides, soit, si elles sont souples, elles comportent au moins une armature rigide pour faciliter leur manipulation.

*L'état de la technique peut être défini par les documents suivants :*
- *WO 95*/*07041 : Machine à café express caractérisée par le fait que l'introduction de la pastille s'effectue dans un plan vertical et l'action du piston se situe dans un plan horizontal et que la partie supérieure de ladite machine à café express comporte une fente située à la verticale et au-dessus des butées de sorte que le positionnement de la pièce rigide de chaque* *pastille ou autres entre les butées d'une part et la chaudière d'autre part, se fait par simple gravité. Chaque butée est mobile selon un axe parallèle à l'axe longitudinal de la machine à café express et une ouverture est pratiquée à la verticale et en dessous des butées de sorte que lorsque lesdites butées sont manoeuvrées afin d'être parallèles l'une par rapport à l'autre, la pastille ou autres n'est plus retenue par sa pièce rigide et tombe à l'extérieur de la machine à café express par simple gravité.*
- *WO 95*/*17121 : Machine automatique pour la préparation d'infusions de boissons chaudes telles que du café qui comprend un groupe formé d'un corps placé en regard d'une chaudière, destinés à être rapprochés l'un de l'autre pour former une chambre d'infusion caractérisée par le fait qu'elle comporte, entre le corps et la chaudière, au niveau de la chambre d'infusion :*
- *des moyens de réception d'un conditionnement individuel contenant le produit à infuser qui sont constitués d'au moins un élément escamotable déployé en position sensiblement inférieure destiné à immobiliser temporairement ledit conditionnement entre le corps et la chaudière,*
- *des moyens de maintien en position du conditionnement qui sont constitués de deux rainures latérales sensiblement verticales dans lesquelles ledit conditionnement coulisse et est maintenu en position verticale lorsque les moyens de réception sont présents, et*
- *des moyens d'éjection automatique dudit conditionnement qui sont constitués d'élément escamotable qui est escamoté par rapport au passage du conditionnement individuel pour permettre l'éjection par simple gravité du conditionnement individuel, le déplacement du conditionnement individuel étant perpendiculaire à l'axe de la machine.*

L'invention permet au moyen de cette chambre d'extraction d'utiliser des pastilles ou des dosettes pré-dosées formées de papier filtre contenant par exemple le café moulu, avec ou sans armature.

A cet effet, la chambre d'extraction, selon l'invention, est du type à alimentation en pastilles ou dosettes pré-dosées en café moulu par une introduction verticale, ladite chambre d'extraction est composée de deux parties mobiles dans un plan horizontal, une partie mobile ou demi-chambre est destinée à l'entrée de l'eau chaude de manière à pouvoir s'écarter ou se rapprocher l'une de l'autre pour fermer ou ouvrir la chambre d'extraction avec la douchette verticale et l'autre partie mobile ou demi-chambre est prévue avec un filtre vertical pour recevoir et évacuer le café.

Les deux parties mobiles dans un plan horizontal sont montées en plus oscillantes verticalement l'une en face de l'autre selon leur axe transversal. Les deux parties mobiles formant la chambre d'extraction sont asservies l'une à l'autre pour osciller en sens inverse de manière à ouvrir la chambre vers le haut en formant un V pour recevoir la dose, à se rapprocher l'une de l'autre pour fermer la chambre d'extraction durant la phase d'extraction et enfin ouvrir la chambre vers le bas en formant un accent circonflexe ^, et ce pour permettre l'évacuation par gravité de la pastille ou dosette utilisée.

Dans un mode préféré de réalisation, les deux parties mobiles forment chacune verticalement le volume d'une demi-chambre dont le fond vertical est mobile pour venir, soit affleurer le plan vertical de jointoiement des deux parties soit, au contraire, s'enfoncer dans le corps principal de chaque partie pour épouser tout le volume de la demi chambre prévue à cet effet dans ledit corps principal de chaque partie mobile.

Selon un mode de réalisation, le fond de la demi-chambre est rigide mais il est monté mobile sur un moyen faisant office de ressort de rappel qui tend à décoller le' fond rigide du corps principal.

Selon un autre mode de réalisation, le fond de la demi-chambre est souple, la partie centrale est rigide ou semi-rigide et est maintenue par une membrane périphérique souple disposée à l'entrée de chaque partie mobile.

Chaque membrane est fixée sur chaque partie mobile par un moyen tel qu'un anneau de fixation.

Dans d'autres modes de réalisation, la chambre d'extraction comprend des moyens de guidage de la dose pour positionner la dose sensiblement en position verticale.

Les moyens de guidage latéral de la dose pourront être aptes à la retenir lors de l'ouverture de la chambre pour optimiser le décollement de la dose et des parties mobiles en vue de l'évacuation.

Les moyens de guidage pourront comporter deux rainures verticales aptes à coopérer avec des doses à armature périphérique, ladite armature périphérique s'insérant au moins partiellement dans les rainures.

Les moyens de guidage pourront former également une butée pour au moins l'une des parties mobiles afin d'en limiter le mouvement d'oscillation.

Les dessins ci-joints sont donnés à titre d'exemples indicatifs et non limitatifs. Ils représentent un mode de réalisation préféré selon l'invention. Ils permettront de comprendre aisément l'invention.

Les figures 1, 2, 3, 4 et 5 mettent en évidence la cinématique des deux parties mobiles qui forment la chambre d'extraction.

La figure 1 représente la position de départ avant l'introduction de la pastille ou dosette qui en butée à l'extérieur de la chambre.

La figure 2 met en évidence l'ouverture de la chambre par les deux parties mobiles oscillantes et/ou la dose est introduite dans la chambre et vient en butée à l'intérieur de la chambre.

La figure 3 met en évidence la fermeture de la chambre par rapprochement des deux parties mobiles pour la confection du café.

La figure 4 met en évidence l'écartement des deux parties mobiles qui forment la chambre d'extraction lorsque la confection du café est terminée.

La figure 5 met en évidence l'ouverture de la chambre par oscillation des deux parties mobiles permettant ainsi l'éjection par simple gravité de la pastille de la dosette. La figure 5 met en évidence le retour à la position de départ du fonctionnement de la chambre d'extraction.

Les figures 6 à 11 représentent des vues de détail d'une chambre d'extraction composée de deux parties mobiles logeant chacune deux demi-chambres dans le fond vertical et mobile, afin de pouvoir dégager la dosette.

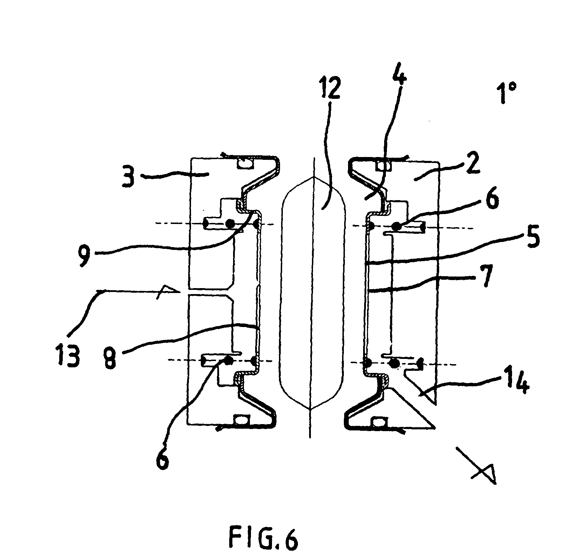

La figure 6 représente une vue schématique de la chambre d'extraction dont le fond est mobile en position d'ouverture avec une douchette et un filtre éjecteur. Le fond vertical mobile est asservi à un ressort de rappel disposé entre le corps principal de la partie mobile et le fond de la demi-chambre.

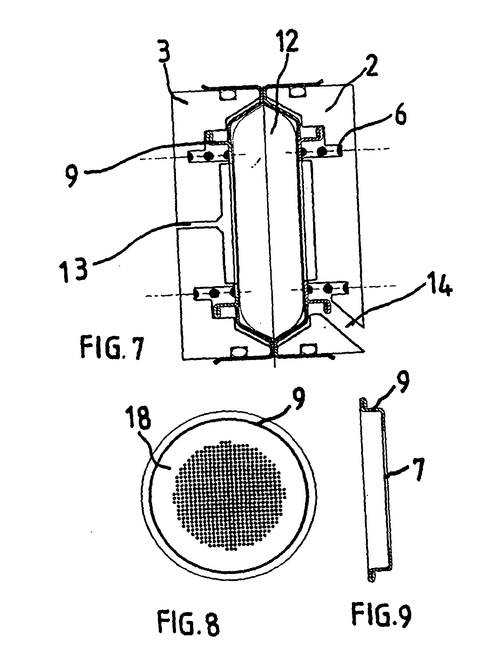

La figure 7 est une vue selon la figure 6 mais en position de fermeture de la chambre d'extraction.

La figure 8 est une vue de face de la douchette qui est montée mobile et qui forme le fond mobile d'une demi-chambre d'extraction.

La figure 9 est une vue de la douchette, vue en coupe transversale.

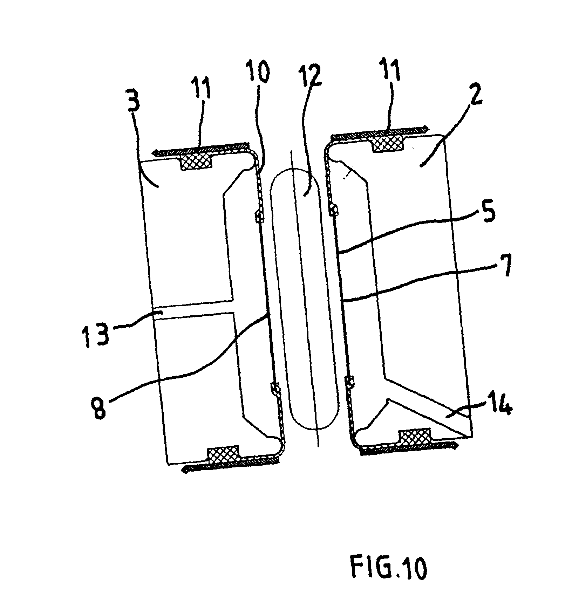

La figure 10 représente une chambre d'extraction dont le fond est souple, la partie centrale est rigide ou semi-rigide et est maintenue par une membrane périphérique disposée à l'entrée de chaque demi-chambre de chaque partie mobile l'une en regard de l'autre.

Cette vue représente ce mode de réalisation de chambre d'extraction en position d'ouverture. Sur une des parties mobiles, la partie centrale est formée par la douchette, l'autre partie centrale est formée par le filtre.

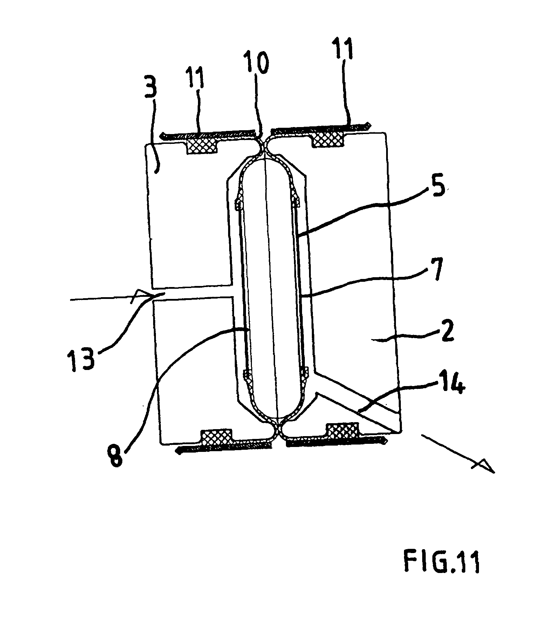

La figure 11 est une vue schématique de la chambre d'extraction représentée à la figure 10 mais en position de fermeture.

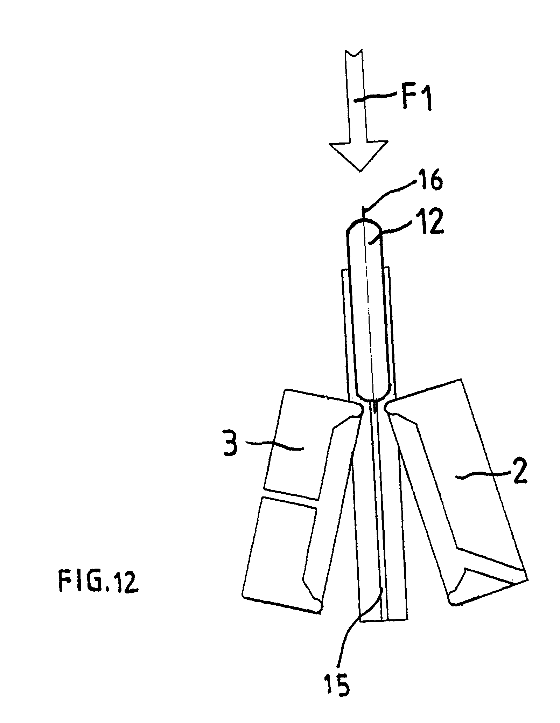

La figure 12 présente un autre mode de réalisation de l'invention, avec des moyens de guidage.

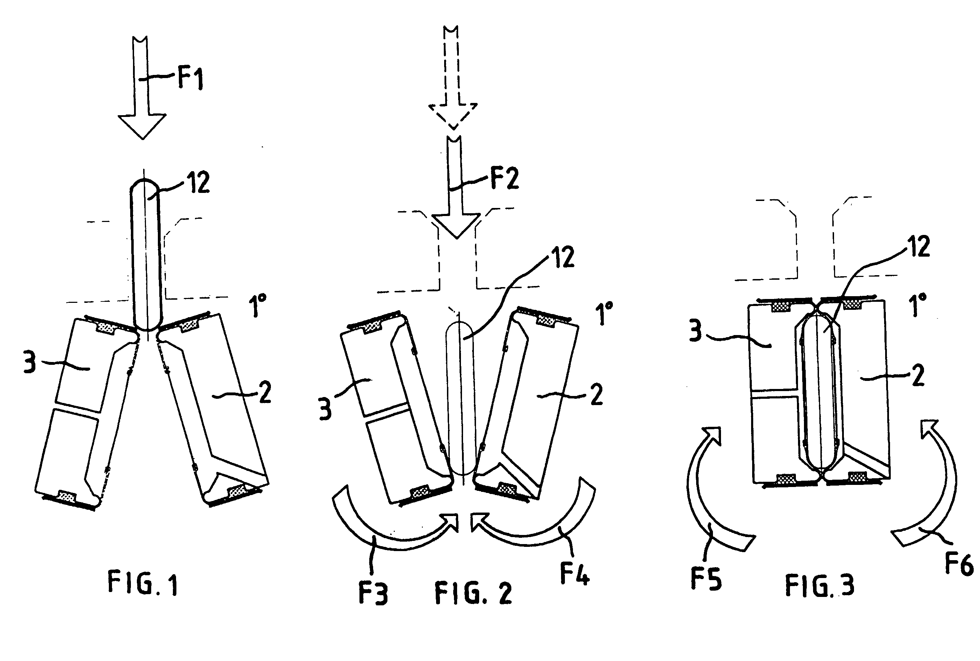

La chambre d'extraction, selon l'invention, est du type alimentation en pastille 2 ou dosette pré-dosée par exemple en café moulu. Ce type de dosette doit être introduit par une introduction verticale telle que représentée par les flèches F1 et F2, représentées dans les figures 1 et 2 (dosette en butée à l'extérieur de la chambre).

La chambre d'extraction 1 est composée de deux parties mobiles 2 et 3. Ces deux parties 2, 3 sont mobiles dans un plan horizontal.

Une partie mobile ou demi-chambre 3 est destinée à l'entrée 13 de l'eau chaude avec la douchette verticale 8 et l'autre partie mobile ou demi-chambre 2 est prévue avec un filtre vertical 7 pour recevoir et évacuer le café par le conduit 14.

Les deux parties mobiles dans un plan horizontal sont montées, de surcroît, oscillantes verticalement selon leur axe transversal.

Ainsi, les deux parties mobiles 2 et 3 formant la chambre d'extraction 1 sont asservies l'une à l'autre pour osciller en sens inverse selon leur axe transversal de manière à ouvrir la chambre d'extraction 1 vers le haut en formant un V tel que représenté à la figure 2, un V dont la pointe est en bas, permettant ainsi à la dosette 12, qui dans la figure 1, était en butée à l'extérieur de la chambre d'extraction 1, de tomber dans la chambre d'extraction 1, comme représenté sur la figure 2, pour venir en butée à l'intérieur de la chambre 1.

A cet effet, les deux parties mobiles 2 et 3 oscillent en s'écartant vers le haut et en se rapprochant dans leur partie basse telle que représenté par les flèches F3 et F4 pour chacune des deux parties mobiles.

Ces deux parties mobiles 2 et 3 formant la chambre d'extraction 1 sont asservies l'une à l'autre de manière à se rapprocher l'une de l'autre selon les flèches F5 et F6, durant la phase d'extraction. Ce rapprochement a lieu dans un plan horizontal. La chambre d'extraction 1 est alors fermée.

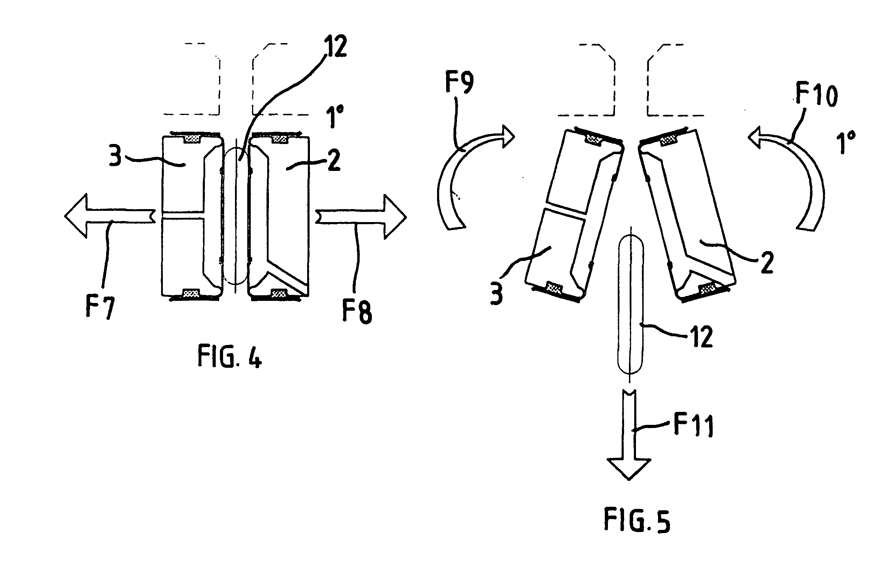

Enfin, les deux parties mobiles 2 et 3 sont asservies pour s'écarter l'une de l'autre, selon les flèches F7 et F8 dans un plan horizontal et pour ouvrir la chambre d'extraction 1, comme représenté à la figure 4.

Les deux parties mobiles 2 et 3 sont alors asservies pour osciller selon les flèches F9 et F10 et se rapprocher, dans leur partie supérieure l'une de l'autre tandis qu'elles s'écartent, dans leur partie inférieure pour former un V inversé ou un accent circonflexe, c'est-à-dire qu'elles ouvrent la chambre d'extraction 1 de manière à libérer la dosette 2 qui tombe par simple gravité telle qu'indiqué sur la flèche F11, ce qui permet l'évacuation de ladite dosette.

Les deux parties mobiles 2, 3 forment chacune verticalement une demi-chambre 4, dont le fond 5 peut être mobile pour venir, soit affleurer le plan vertical de jointoiement des deux parties 2 et 3 lorsque celles-ci sont l'une contre l'autre soit, au contraire, le fond vertical mobile 5 vient s'enfoncer dans le corps principal de chaque partie mobile 2, 3 pour épouser tout le volume de la demi-chambre prévue à cet effet dans le corps principal des deux parties mobiles 2, 3.

Selon un mode de réalisation représenté dans les figures 6 et 7, le fond 5 de la demi-chambre est rigide, il est monté mobile sur un moyen faisant office de rappel 6 qui tend à décoller le fond 5 rigide du corps principal 2 ou 3.

Selon le mode de réalisation représenté à la figure 6, sur la partie mobile 2, sur le fond mobile 5, la partie centrale du fond mobile 5 est un filtre 7.

Sur la partie mobile 3, le fond mobile 5, dans sa partie centrale, est une douchette 8. Ces deux éléments filtre 7 7 et douchette 8 sont montés sur un anneau rigide 9 qui est disposé sur chaque partie mobile 2 et 3. Un ressort de rappel 6 tend à repousser cet anneau qui porte, soit la douchette 8, soit le filtre 7 vers l'extérieur de la demi-chambre de la partie mobile 2 ou 3.

On comprend donc aisément que lorsque les deux parties 2 et 3 sont assemblées en force, la dosette 2 est bien maintenue dans la chambre d'extraction 1, tandis que dès que les deux parties mobiles 2 et 3 s'écartent et notamment lorsqu'elles s'ouvrent vers le bas, la dosette 2 est éjectée par gravité et du fait que les deux fonds mobiles 5 des deux parties 2 et 3 sont repoussés par les ressorts de rappel 6 (qui tapissent le fond des logements prévus à cet effet dans les parties mobiles 2 et 3).

La figure 7 met en évidence une phase d'extraction lorsque les deux parties mobiles 2 et 3 sont rapprochées l'une contre l'autre dans la phase de confection du café.

La figure 8 représente la douchette 8 vue de dessus, douchette montée sur l'anneau rigide de maintien 9.

La figure 9 est une vue en coupe transversale du filtre 7 monté sur son anneau rigide 9.

Selon un autre mode de réalisation représenté à la figure 10, on retrouve les deux parties mobiles 2 et 3 et les fonds mobiles 5 ainsi que le filtre 7, la douchette 8, par contre la douchette 8 et le filtre 7 qui sont rigides ou semi-rigides sont maintenus chacun à leur place dans la partie mobile 3 ou la partie mobile 2 par une membrane périphérique souple 10, la membrane étant disposée à l'entrée de chaque partie mobile 2 ou 3.

Cette membrane est maintenue sur chaque partie mobile 2 ou 3, par un anneau de maintien 11 ou anneau de fixation.

La figure 12 présente un autre mode de réalisation de l'invention.

Selon ce mode, des moyens de guidage de la dose 12 sont formés.

Une première fonction de ces moyens est de positionner la dose 12 en position sensiblement verticale. Le déplacement vertical opéré par la dose 12 durant les différentes phases de fonctionnement de l'invention est optimisé par ce guidage.

Par ailleurs, les moyens de guidage peuvent retenir la dose 12 latéralement de façon suffisante pour optimiser le décollement.

La propension de la dose 12 à rester en contact sur la surface d'une des parties mobiles 2,3 est ainsi contrée.

Les moyens de guidage peuvent remplacer ou compléter l'action d'un fond mobile 5 ou d'une membrane 10 tels que décrits précédemment.

Dans le cas illustré en figure 12, les moyens de guidage comportent deux rainures 15 verticales. Ce mode de réalisation est plus particulièrement destiné à l'utilisation de doses 12 à armature périphérique 16.

Tel que représenté, l'armature 16 s'insère dans la rainure 15. Un guidage et une rétention latérale de la dose 12 sont ainsi formés.

Cependant, la formation des moyens favorisant le décollement de la dose 12, tels qu'un fond mobile, une membrane souple ou des moyens de guidage ne sont que des modes particuliers, non restrictifs, de l'invention.

En effet, un décollement naturel de la dose 12, pendant l'évacuation, peut être produit par simple gravité.

Dans un autre mode de réalisation, les moyens de guidage tels que des rainures 15 permettent aussi de former une butée vis-à-vis du déplacement des parties mobiles 2, 3. Ils permettent alors, sans élément constructif supplémentaire de limiter la liberté angulaire de l'oscillation d'une ou des deux parties mobiles 2, 3.

Les moyens de guidage participent alors aux étapes cinématiques des parties mobiles 2, 3.

REFERENCES
1. Chambre d'extraction
2. Partie mobile ou demi-chambre
3. Partie mobile ou demi-chambre
4. Demi-chambre
5. Fond de la demi-chambre 4
6. Moyen faisant office de rappel ou ressort
7. Filtre
8. Douchette
9. Anneau rigide
10. Membrane périphérique souple
11. Anneau de maintien ou anneau de fixation
12. Pastille ou dosette pré-dosée
13. Entrée de l'eau chaude
14. Evacuation du café
15. Rainure verticale
16. Armature de la pastille ou de la dosette
   F1. Introduction verticale (dose en butée à l'extérieur de la chambre)
   F2. Chute verticale (dose en butée à l'intérieur de la chambre)
   F3. F4.Ouverture de la chambre d'extraction
   F5.F6. Fermeture de la chambre d'extraction (confection du café)
   F7.F8. Ouverture de la chambre (confection terminée)
   F9.F10. Ouverture de la chambre, retour à la position du départ
   F11. Ejection de la dose

## Revendications

1. Chambre d'extraction (1) du type à alimentation en pastilles ou dosettes pré-dosées (12) en café moulu par une introduction verticale, ladite chambre d'extraction (1) est composée de deux parties mobiles (2, 3) dans un plan horizontal, une partie mobile ou demi-chambre (3) est destinée à l'entrée de l'eau chaude de manière à pouvoir s'écarter ou se rapprocher l'une de l'autre pour fermer ou ouvrir la chambre d'extraction avec la douchette (8) verticale et l'autre partie mobile ou demi-chambre (2) est prévue avec un filtre (7) vertical pour recevoir et évacuer le café **caractérisée par le fait**
**que** les deux parties mobiles (2, 3) dans un plan horizontal sont montées en plus oscillantes verticalement l'une en face de l'autre selon leur axe transversal ; les deux parties mobiles (2, 3) formant la chambre d'extraction (1) sont asservies l'une à l'autre pour osciller en sens inverse de manière à ouvrir la chambre vers le haut en formant un V pour recevoir la dose (12), à se rapprocher l'une de l'autre pour fermer la chambre d'extraction (1) durant la phase d'extraction et enfin ouvrir la chambre (1) vers le bas en formant un accent circonflexe ^, et ce pour permettre l'évacuation par gravité de la pastille ou dosette utilisée (12).

2. Chambre d'extraction selon la revendication 1 **caractérisée par le fait**
**que** les deux parties mobiles (2, 3) forment chacune verticalement le volume d'une demi-chambre (2, 3) dont le fond vertical est mobile pour venir, soit affleurer le plan vertical de jointoiement des deux parties (2, 3) soit, au contraire, s'enfoncer dans le corps principal de chaque partie pour épouser tout le volume de la demi chambre prévue à cet effet dans ledit corps principal de chaque partie mobile (2, 3).

3. Chambre d'extraction selon la revendication,2 **caractérisée par le fait**
**que** le fond de la demi-chambre (2, 3) est rigide mais il est monté mobile sur un moyen faisant office de ressort de rappel (6) qui tend à décoller le fond rigide du corps principal (2, 3).

4. Chambre d'extraction selon la revendication 2 **caractérisée par le fait que** le fond demi-chambre est souple, la partie centrale (7 ou 8) est rigide ou semi-rigide et est maintenue par une membrane périphérique souple (10) disposée à l'entrée de chaque partie mobile.

5. Chambre d'extraction selon la revendication 4 **caractérisée par le fait que** chaque membrane (10) est fixée sur chaque partie mobile (2, 3) par un moyen tel qu'un anneau de fixation (11).

6. Chambre d'extraction selon l'une quelconque des revendications 1 à 5 **caractérisée par le fait qu'**elle comprend des moyens de guidage de la dose (12) pour positionner la dose (12) sensiblement en position verticale.

7. Chambre d'extraction selon la revendication 6 **caractérisée par le fait que** les moyens de guidage latéral de la dose (12) sont aptes à la retenir lors de l'ouverture de la chambre (1) pour optimiser le décollement de la dose (12) et des parties mobiles (2, 3) en vue de l'évacuation.

8. Chambre d'extraction selon la revendication 6 ou 7, **caractérisé par le fait que** les moyens de guidage comportent deux rainures (15) verticales aptes à coopérer avec des doses (12) à armature périphérique (16), ladite armature périphérique (16) s'insérant au moins partiellement dans les rainures (15).

9. Chambre d'extraction selon l'une quelconque des revendications 6 à 8, **caractérisé par le fait**
**que** les moyens de guidage forment également une butée pour au moins l'une des parties mobiles (2, 3) afin d'en limiter le mouvement d'oscillation.

## Patentansprüche

1. Extraktionskammer (1) zur senkrechten Zuführung von Tabletten oder Dosiseinheiten (12) mit gemahlenem Kaffee, bestehend aus zwei in horizontaler Ebene beweglichen Teilen (2, 3), die sich gegenseitig annähern oder voneinander entfernen können, um die Extraktionskammer zu öffnen oder zu schließen, von denen der eine Halbkammer (3) bildet und zur Einleitung von heißem Wasser bestimmt ist und eine senkrecht stehende Brause (8) enthält und der andere bewegliche Teil bzw. die Halbkammer (2) mit einem senkrechten Filter (7) versehen ist, um den Kaffee aufzunehmen und wieder abzugeben, **gekennzeichnet dadurch,**
**dass** die beiden in der horizontalen Ebene beweglichen Teile (2, 3) außerdem um ihre Längsachse in senkrechter Richtung drehbar gelagert sind, wobei die Bewegungen der beiden beweglichen Teile (2, 3), die die Extraktionskammer (1) bilden, in der Weise aufeinander abgestimmt sind, dass sie sich in entgegengesetzter Richtung drehen, um die Kammer nach oben hin zu öffnen und so ein "V" bilden, um die Dosis (12) aufzunehmen, sich wieder annähern, um die Extraktionskammer (1) während der Extraktionsphase zu schließen, und schließlich die Kammer (1) nach unten hin öffnen und dabei ein Zirkumflex "^ " bilden, um die benutzte Dosis oder Tablette (12) durch Schwerkraft herausfallen zu lassen.

2. Extraktionskammer nach Anspruch 1, **gekennzeichnet dadurch,**
**dass** jedes der beiden beweglichen Teile (2, 3) eine Halbkammer (2, 3) enthält, deren senkrechte Rückwand beweglich ist, um sich der gemeinsamen senkrechten Ebene der beiden Teile (2, 3) anzunähern und sie entweder zu berühren oder sich in den Hauptkörper jedes Teils einzulegen und sich im gesamten Raum der hierzu in dem besagten Hauptkörper jedes beweglichen Teils (2, 3) vorgesehenen Halbkammer anzulegen.

3. Extraktionskammer gemäß Anspruch 2, **gekennzeichnet dadurch,**
**dass** die Rückwand jedes beweglichen Teils (2, 3) steif, aber drehbar mit einem Mittel verbunden ist, dass als Rückholfeder (6) dient und darauf hin wirkt, dass die steife Rückwand des Hauptkörpers (2, 3) abgelöst wird.

4. Extraktionskammer nach Anspruch 2, **gekennzeichnet dadurch,**
**dass** die Rückwand der Halbkammer weich ist, der mittlere Teil (7 oder 8) steif oder halbsteif ist und von einer weichen Membran (10) am Umfang gehalten wird, die am Eingang jedes beweglichen Teils angeordnet ist.

5. Extraktionskammer nach Anspruch 4, **gekennzeichnet dadurch,**
**dass** die Membrane (10) jedes beweglichen Teils (2, 3) mit einem Mittel, zum Beispiel einem Befestigungsring (11), befestigt ist.

6. Extraktionskammer nach einem der Ansprüche 1 bis 5, **gekennzeichnet dadurch,**
**dass** sie Führungen für die Dosis (12) besitzt, um die Dosis (12) mit guter Näherung senkrecht zu positionieren.

7. Extraktionskammer nach Anspruch 6, **gekennzeichnet dadurch,**
**dass** die senkrechten Führungen der Dosis (12) geeignet sind, diese zurückzuhalten, wenn die Kammer (1) geöffnet wird, um das Ablösen der Dosis (12) und der beweglichen Teile (2, 3) für das Herausfallen zu unterstützen.

8. Extraktionskammer nach Anspruch 6 oder 7, **gekennzeichnet dadurch,**
**dass** die Führungen zwei senkrechte Nuten (15) besitzen, die geeignet sind, mit den eine Verstärkung (16) am Umfang besitzenden Dosiseinheiten (12) zusammenzuwirken, wobei diese Verstärkung (16) zumindest teilweise in die Nuten (15) eingreift.

9. Extraktionskammer nach einem der Ansprüche 6 bis 8, **gekennzeichnet dadurch,**
**dass** die Führungen außerdem einen Anschlag für mindestens einen der beiden beweglichen Teile (2, 3) bilden, um die Schwenkbewegung zu begrenzen.

## Claims

1. Extraction chamber (1) of the type that uses pre-proportioned capsules or doses (12) of ground coffee introduced vertically, the aforementioned extraction chamber (1) consisting of two parts (2, 3) moving in a horizontal plane, one moving part or half-chamber (3) is used to feed in the hot water so as to be able to separate or converge one and the other in order to close or open the extraction chamber with the vertical spray (8) and the other moving part or half-chamber (2) consisting of a vertical filter (7) for receiving and evacuating the coffee, **characterized by** the fact
that the two parts (2, 3) moving in a horizontal plane are also assembled so that they oscillate vertically one opposite the other along their transversal axis; the two moving parts (2, 3) forming the extraction chamber (1) are interlocked one to the other so as to oscillate in the reverse direction so as to open the chamber towards the top by forming a V so as to receive the dose (12), to bring the one closer to the other to close the extraction chamber (1) during the extraction phase, and finally to open the chamber (1) towards the bottom by forming a circumflex accent ^ and allow the ejection by gravity of the capsule or dose used (12).

2. Extraction chamber according to claim 1 **characterized by** the fact
that the two moving parts (2, 3) each one forms vertically the volume of one half-chamber (2, 3) whose vertical bottom is mobile so as to become flush, either with the vertical plane of the joining between the two parts (2, 3) or, conversely, to insert in the main body of each part in order to marry all the volume of the half-chamber provided for this purpose in the aforementioned main body of each moving part (2, 3).

3. Extraction chamber according to the claim 2 **characterized by** the fact
that the bottom of the half-chamber (2, 3) is rigid but is fitted mobile on a feature acting as return spring (6) which tends to unstick the rigid bottom of the main body (2, 3).

4. Extraction chamber according to claim 2 **characterized by** the fact
that the bottom half-chamber is flexible, the central part (7 or 8) is rigid or semi-rigid and is maintained by a flexible peripheral membrane (10) arranged at the entrance to each moving part.

5. Extraction chamber according to claim 4 **characterized by** the fact
that each membrane (10) is fixed on each moving part (2, 3) by means such as a holding ring (11).

6. Extraction chamber according to any of claims 1 to 5 **characterized by** the fact
that it includes means for guidance of the dose (12) so as to roughly position the dose (12) in the vertical position.

7. Extraction chamber according to claim 6 **characterized by** the fact
that the means for side guidance of the dose (12) have a retaining capacity when opening the chamber (1) so as to optimize the separation of the dose (12) and the moving parts (2, 3) ready for ejection.

8. Extraction chamber according to claim 6 or 7, **characterized by** the fact that the means for guidance include two vertical grooves (15) for use with the doses (12) with peripheral reinforcing (16), the aforementioned peripheral reinforcing (16) fitting at least partly in the grooves (15).

9. Extraction chamber according to any of claims 6 to 8, **characterized by** the fact
that the means for guidance also form a stop for at least one of the moving parts (2, 3) and limit its oscillating movement.
